# EUROPEAN PATENT APPLICATION

(11) **EP 0 688 903 A2**
(43) Date of publication of application: **27.12.1995**
(21) Application number: 95304117.5
(22) Date of filing: 14.06.1995
(51) Int. Cl.: E01F 9/06

(54) **Self-emission road studs**

(30) Priority: 22.06.1994 JP 140278/94
(71) Applicant: Nippon Liner Co., Ltd., Tokyo, 101 (JP)
(72) Inventor: Ishida, Kaoru, Kosahigaya-shi, Saitama (JP)
(74) Representative: Harding, Richard Patrick

(57) **Abstract**

A self-emission road stud is designed to be embedded in a road with its head protruding from the road surface, a series of such studs being spaced at intervals to form an indication of a route required or, stop line for example. A self-emission road stud is a road stud of the type which includes an internal light source for spontaneously emitting light from the stud. This self-emission road stud has a body 2 having a reduced-diameter bottom portion serving as a retaining leg 1, the body 2 being in the form of an open-topped metal vessel provided with a relatively thin lid 13 made of transparent material such as polycarbonate, acrylic, or hard glass fitted to the open top of the vessel. The light source 9 is positioned under the lid 13, and parts of the inside and outside of the lid 13 are provided with bevelled surface 16, 17 so that the light source 9 emits light through the bevelled surfaces. Such a road stud can be manufactured in a straightforward manner, and, in use, protrudes from the road surface to only a limited extent whilst providing efficient emission of light.

## Description

This invention relates to a road stud embedded in a road at proper intervals to form an indication such as a route or a stop line with the road-stud head protruded from the road surface, particularly to a self-emission road stud (a type of a road stud including a light source and spontaneously emitting light).

A road stud is arranged at the central position of an intersection, the center line of a road. or a roadside zone at proper intervals.

This type of the self-emission road stud is disclosed in Japanese patents or Japanese Utility Model Application Nos. HEI 1/146313 and HEI 3/86115.

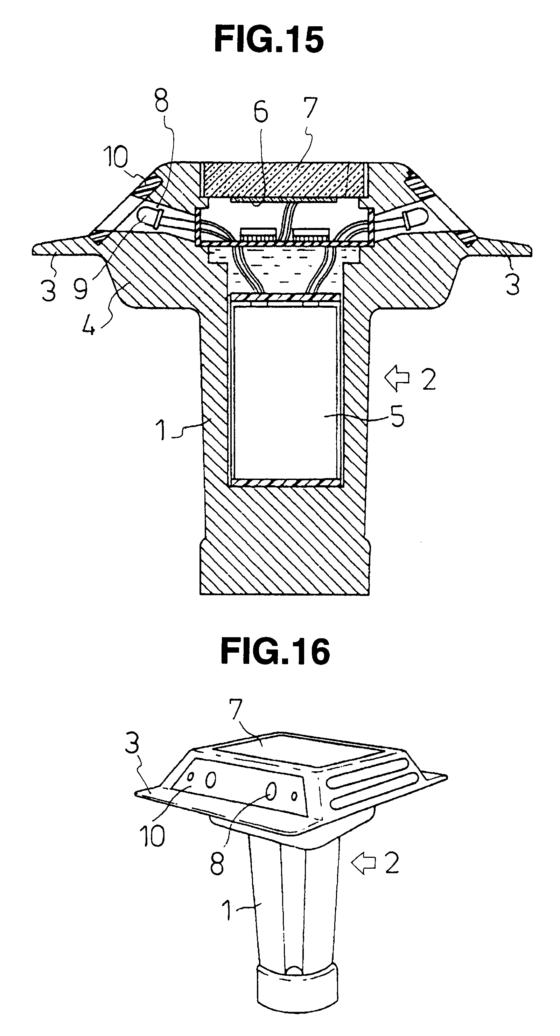

In the case of the self-emission road stud, a body 2 made of aluminum alloy casting having a leg 1 is formed like a truncated pyramid as shown in Figs. 15 and 16. A flange 3 extending outward is formed at the faced two sides of the body 2 respectively and the portion around the joint between the body 2 and the leg 1 is formed to be flat and approximately rectangular as a reinforcement portion 4 with a large wall thickness.

A battery 5 and a solar cell 6 are set in the body 2 and the opening above the body 2 is closed by a transparent protective plate 7.

Moreover, a through-hole 8 toward the lateral is formed at the top of the body 2, a light source 9 such as an LED using the battery 5 and the solar cell 6 as power sources is set in the through-hole 8, and a retroreflection body 10 is set around the opening of the through-hole 8.

The road stud is embedded so that the bottom of the flange 3 contacts the road surface and resultingly the top of the body 2 upper than the flange 3 and on which the through-hole 8 is formed is protruded from the road surface, and the light source 9 is lit by the battery 5 charged by the solar cell 6.

As described above, in the case of an existing self-emission road stud, a light source is set in a through-hole formed at the top of the body in order to lead light to the outside and moreover, the opening of the through-hole is formed like a trumpet so as to disperse the light emitted from the light source. However, it is difficult to recognize the light depending on the direction because the light advances only linearly and a lot of light sources are necessary.

Moreover, a method for positively leading light to the outside by using a lens though not illustrated is attempted. However, a structure including the lens is extremely protruded from the road surface and easily stands in the way because the thickness of the structure increases.

This invention is made to solve the problems of the prior art and its object is to provide a self-emission road stud which can be set on a road without protruding from the road surface or road shoulder, which can lead a lot of light to the outside, and resultingly which can be recognized from any position, and moreover which does not require drilling for emitting light to the out side.

To achieve the above object, this invention is characterized in that the body has the reduced-diameter bottom as a leg, the upside of the body is an open metallic vessel, a relatively-thin lid made of a transparent material such as polycarbonate, acrylic, or hard glass is fitted to the open surface of the upside of the body, a light source is set under the lid, and parts of the inside and outside of the lid are diagonally cut so that the light source faces the diagonally cut surfaces.

Moreover, the body is embedded in a road except the open surface of the upside of the body so that only the upside of the lid is protruded from the road surface.

More minutely, a battery and a solar cell located above the battery are set in the body and the light source is set around the solar cell.

Moreover, a first quadrangular recess is formed at the center of the inside of the lid, a second recess extending up to the center of a side of the quadrangle is formed continuously from the first recess, the solar cell is set in the first recess, and the light source is set in the second recess.

As for the arrangement of light sources, it is possible to select the following three cases: a case in which they are arranged at four sides to the center of the body or lid, a case in which they are arranged at two sides so that they are lined, and a case in which they are arranged only at one side.

According to this invention, the light emitted from a light source enters a lid made of a transparent material and it is divided into refracted light and rectilinear light at the inside slope and also divided into refracted light and rectilinear light at the outside slope.

Thus, because the rectilinear light is directly emitted from the outside slope to the outside and the refracted light becomes scattered light, the whole material of the lid shines. Therefore, light can be confirmed from any position because the perimeter of the lid is brightened by the above two types of light.

Because the road stud is embedded in a road so that only the upside of the lid is protruded from the road surface, the stud is not extremely protruded from the road surface or road shoulder. Therefore, the road stud is very safe because it does not stand in the way.

Moreover, a battery and a solar cell located above the battery are set in the body, the solar cell generates electric power by the sunlight striking the lid in the daytime to charge the battery, and the light sources arranged around the solar cell are turned on by the battery.

Furthermore, by setting the solar cell in the first recess formed at the central portion of the inside of the lid and setting a light source in the second recess continued from the first recess, it is possible to decrease the whole thickness and also decrease the size of the portion protruded from the road surface. In this case, the second recess is very effective to pass the light emitted from the light source through the lid.

The invention will be further described with reference to the accompanying drawings which illustrate, by way of example, three embodiments of the invention. In the drawings:
Fig. 1 is a top view showing the first embodiment of the self-emission road stud of this invention;
Fig. 2 is a top view of a lid;
Fig. 3 is a longitudinal sectional view of the lid;
Fig. 4 is a top view of the body showing the first embodiment of the self-emission road stud of this invention excluding the lid;
Fig. 5 is a side view of the first embodiment of the self-emission road stud of this invention;
Fig. 6 is a top view of the second embodiment of the self-emission road stud of this invention;
Fig. 7 is a front view showing the second embodiment of the self-emission road stud of this invention;
Fig. 8 is a side view showing the second embodiment of the self-emission road stud of this invention;
Fig. 9 is a top view showing the self-emission road stud of the second embodiment of this invention arranged on a center line;
Fig. 10 is a top view showing the third embodiment of the self-emission road stud of this invention;
Fig. 11 is a front view showing the third embodiment of the self-emission road stud of this invention;
Fig. 12 is a side view showing the third embodiment of the self-emission road stud of this invention;
Fig. 13 is a top view showing the self-emission road stud of the third embodiment of this invention arranged on the road shoulder;
Fig. 14 is a top view showing the self-emission road stud of the third embodiment of this invention arranged on a crosswalk;
Fig. 15 is a longitudinal sectional view of an existing road stud; and
Fig. 16 is a perspective view of the existing road stud.

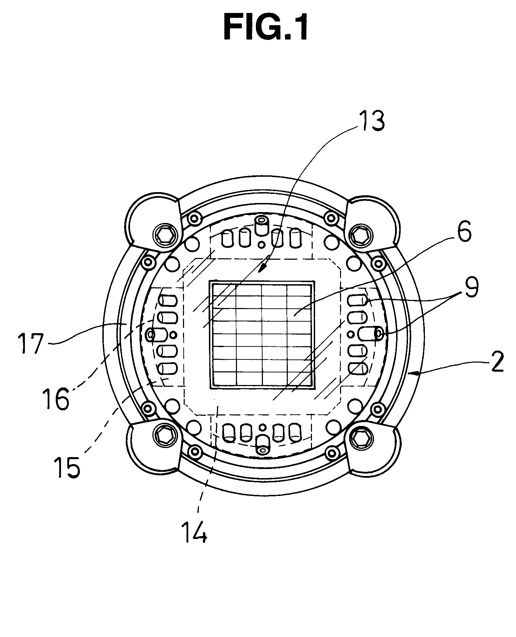

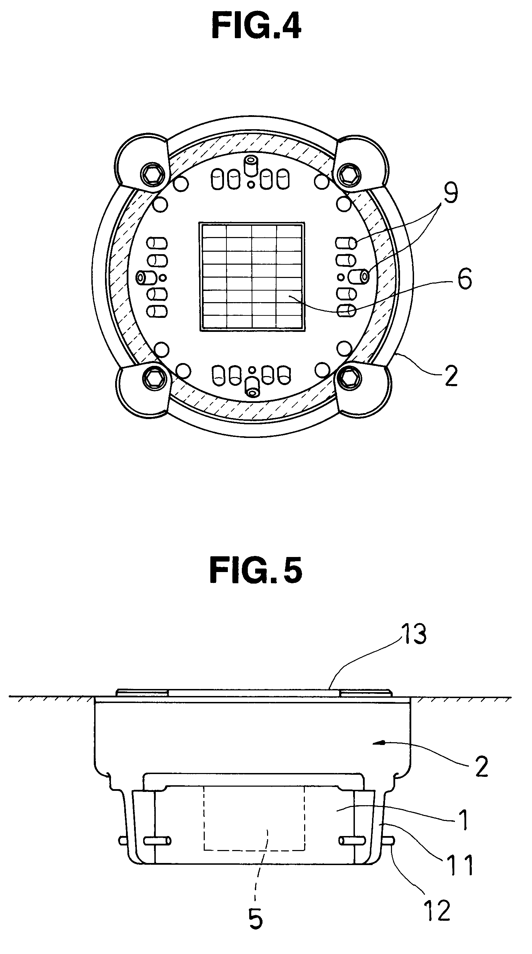

The embodiments of this invention are described below by referring to the accompanying drawings. In Figs. 1 and 5, symbol 2 represents a body made of aluminum alloy casting provided with the reduced-diameter bottom as a leg 1 the same as the existing road stud does.

A vertical rib 11 is formed on the outer periphery of the leg 1 and a pin-shaped anchor 12 is set at the bottom of the vertical rib 11.

The body 2 is a metallic vessel whose upside is open and a battery 5 and a solar cell 6 located above the battery 5 are set in the body 2. Moreover, as shown in Fig. 4, a light source 9 such as an LED is arranged around the solar cell 6.

Furthermore, though other electronic parts and electronic circuits used for control are arranged, they are not illustrated.

Furthermore, a relatively-thin lid 13 made of a transparent material such as polycarbonate, acrylic, or hard glass is fitted to the opening at the upside of the body 2.

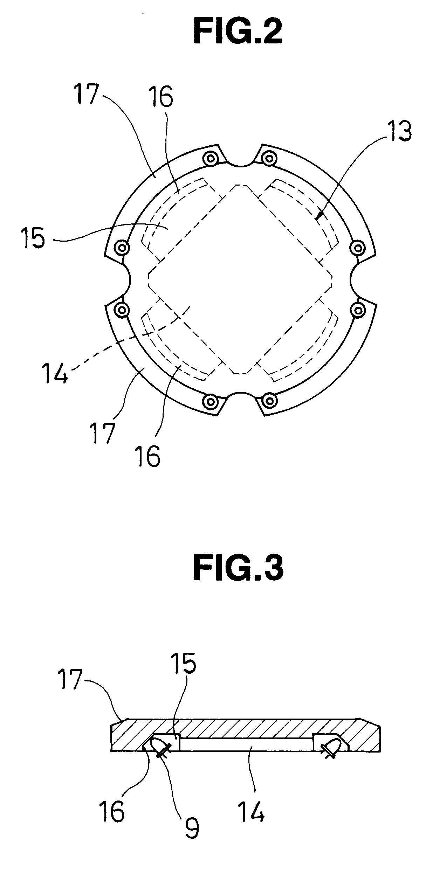

As shown in Figs. 2 and 3, a first quadrangular recess 14 is formed at the central position of the inside of the lid 13 and a second recess 15 continued from the first recess 14 is formed at the center of each side of the quadrangle so as to extend outward.

The solar cell 6 is set in the first recess 14 and the light source 9 is set in the second recess 15.

In the case of this embodiment, the second recess 15 is formed at four sides of the first recess 14 one each and the light source 9 is also arranged at four sides one each.

Moreover, the portions of the lid 13 where the light sources 9 are faced each other are formed into slopes 16 and 17 by chiseling part of the lid 13.

The tilt angle of the inside slope 16 is different from that of the outside slope 17. For example, the slope 16 has a tilt angle of 45ₒ and the slope 17 has a tilt angle of 19ₒ. However, it is possible to set the tilt angle to any value in accordance with the installation condition.

The body 2 is embedded in a road except the upside open surface as shown in Fig. 5.

By embedding the body as described above, a thin road stud which has not been used so far is realized because only the upside of the lid 13 is exposed.

The electric power generated by the solar cell 6 is stored in the battery 5 and the light source 9 emits light by using the battery 5 as a power source.

The light emitted from the light source 9 enters the lid 13 through the slope 16 where the light is divided into refracted light and rectilinear light. Also at the outside slope 17, the light is divided into refracted light and rectilinear light.

Thus, the rectilinear light is directly emitted from the outside slope 17 and moreover the emitted light is divided into four directions. The refracted light becomes scattered light, the whole material of the lid brightens, and the perimeter of the lid 13 is brightened like a ring by these two types of lights as shown by the shaded portion in Fig. 4.

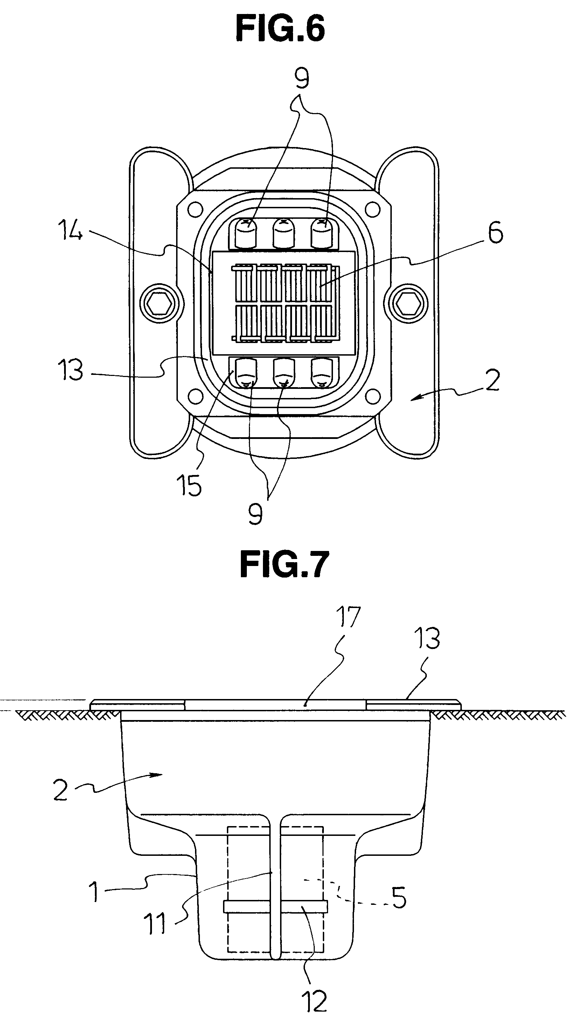

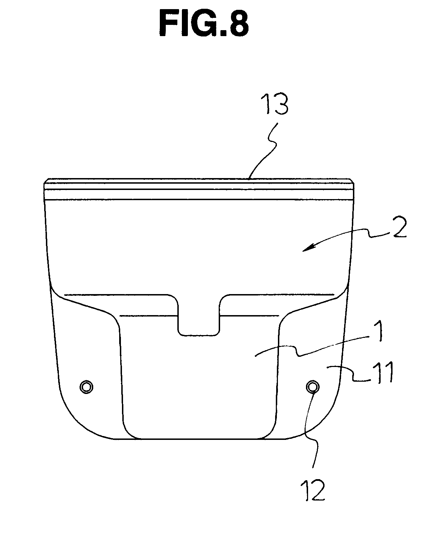

Figs. 6 to 8 show the second embodiment of this invention, in which light sources 9 are arranged at two sides so that they are mutually linearly lined to the center of the body 2 or lid 13.

That is, in the case of this embodiment, two second recesses 15 are formed so that they extend to the outside of the first recess 14 formed at the central portion of the inside of the lid 13 and linearly lined and the light source 9 is set in the second recess 15.

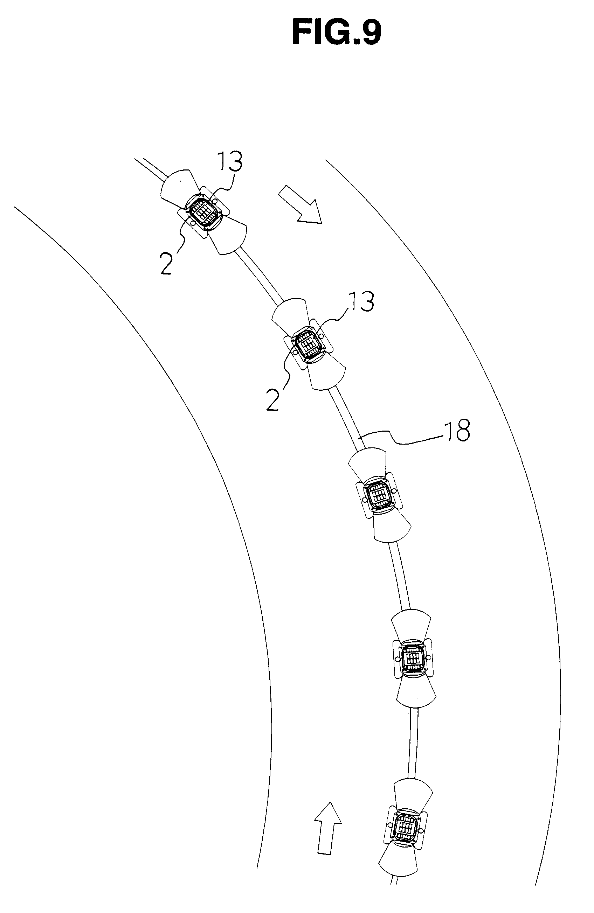

Fig. 9 shows the second embodiment arranged along a center line 18. Rays of the light emitted outward from the outside slope of the lid 13 are linearly lined and the direction of the rays is adjusted to the direction of the center line 18.

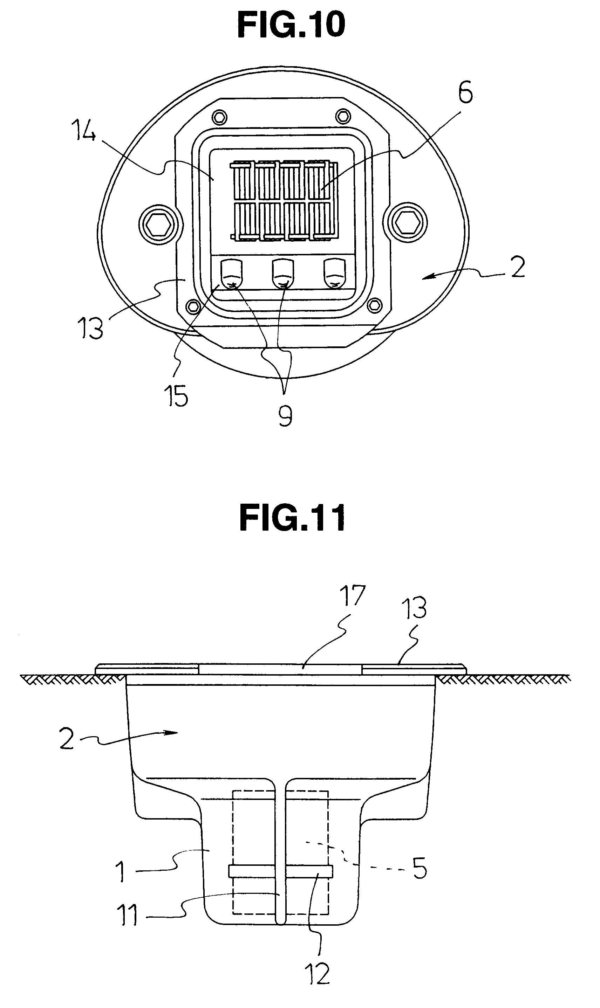

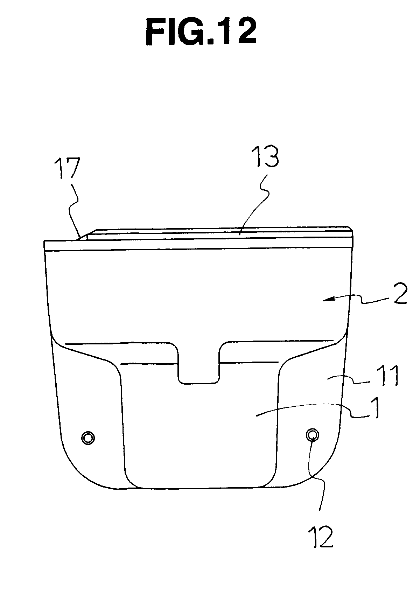

Figs. 10 to 12 show the third embodiment of this invention, in which the light sources 9 are arranged at only one side to the center of the body 2 or lid 13.

In the case of this embodiment, only one second recess 15 is formed so as to extend to the outside of the first recess 14 formed at the central portion of the inside of the lid 13 and the light sources 9 are set in the second recess 15.

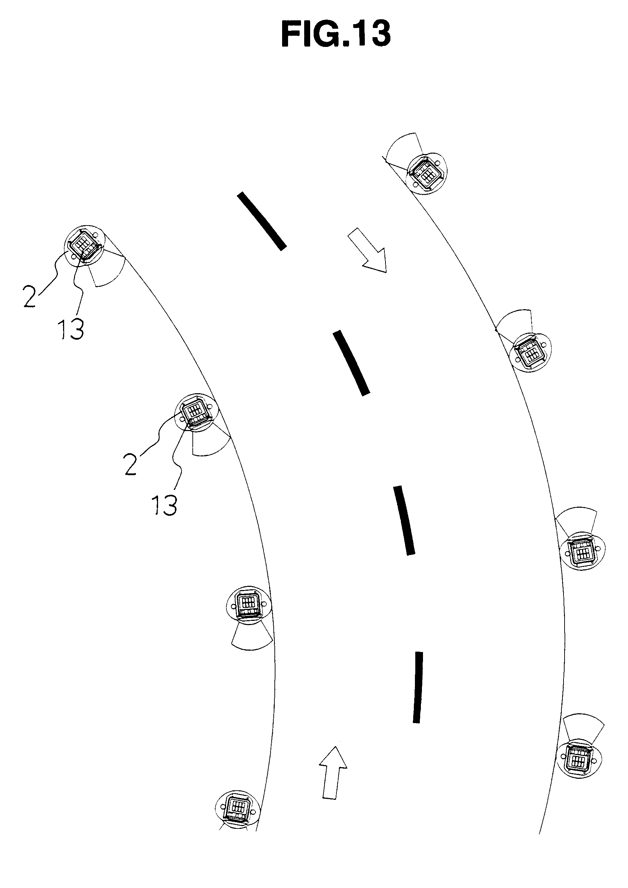

Fig. 13 shows the third embodiment set at a road shoulder, in which rays of the light emitted outward from the outside slope of the lid 13 face a car traveling toward the third embodiment.

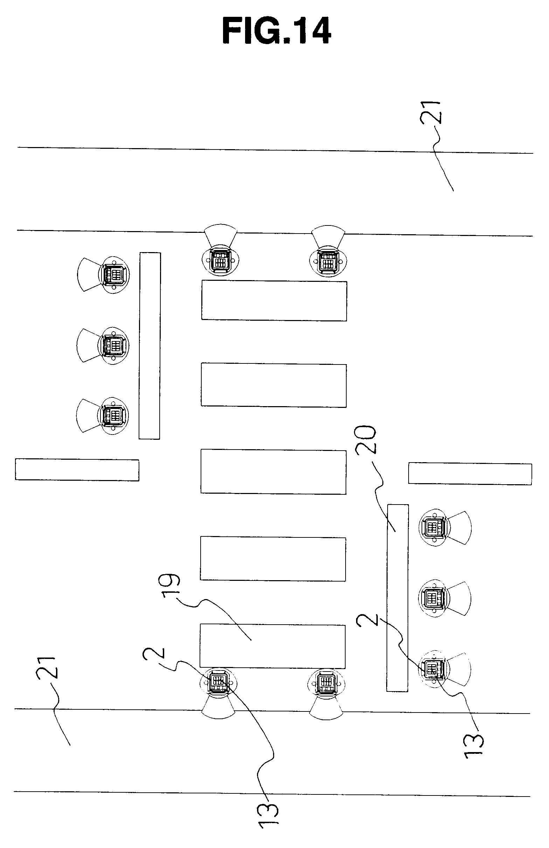

Fig. 14 shows the third embodiment set at a crosswalk 19 or stop line 20. Symbol 21 in Fig. 14 represents a sidewalk.

As described above, the self-emission road stud of this invention is very safe because it does not extremely protrude from the road surface or road shoulder or does not stand in the way. Moreover, the road stud can emit many rays outward and resultingly, it can be recognized from any position. Furthermore, the road stud can easily be manufactured because it does not require drilling for emitting light outward.

## Claims

1. A self-emission road stud comprising a body (2) having a reduced-diameter bottom portion serving as a retaining leg (1) and a top portion (13) which is at least partially transparent, and a light source (9) within the body for emitting light through the top portion, characterised in that the body (2) is in the form of an open-topped metal vessel provided with a relatively thin lid (13) made of transparent material fitted to the open top of the vessel, the light source (9) being positioned under the lid, and parts of the inside and outside of the lid (13) being provided with bevelled surfaces (16, 17) so that the light source (9) emits light through the bevelled surfaces.

2. A road stud according to claim 1, characterised in that the body (2) is adapted to be embedded in a road so that only an upper part of the lid (13) protrudes above the road surface.

3. A road stud according to claim 1 or 2, characterised in that a battery (5) is located within the body (2) for supplying the light source (9).

4. A road stud according to claim 1, 2, or 3, characterised in that a solar cell (6) is located within the body (2) for supplying the light source (9).

5. A road stud according to claim 4, characterised in that the solar cell (6) is located within a first quadrangular recess (14) formed in a central portion of the lid (13) and the light source (9) is located within a second recess (15) extending from at least one side of the first recess (14).

6. A road stud according to any one of claims 1 to 5, characterised in that the light source (9) comprises light-emitting elements arranged on four sides relative to the centre of the body (2).

7. A road stud according to any one of claims 1 to 5, characterised in that the light source (9) comprises light-emitting elements arranged on two sides so that they are symmetrically positioned relative to the centre of the body (2).

8. A road stud according to any one of claims 1 to 5, characterised in that the light source (9) comprises light-emitting elements arranged on only one side relative to the centre of the body (2).

9. A road stud according to any preceding claim, wherein the lid (13) is made of polycarbonate, acrylic or hard glass.
